# EUROPÄISCHE PATENTSCHRIFT

(11) **EP 2 741 949 B1**
(45) Veröffentlichungstag und Bekanntmachung des Hinweises auf die Patenterteilung: **29.03.2017**
(21) Anmeldenummer: 12743888.5
(22) Anmeldetag: 19.07.2012
(51) Int. Cl.: B62D 3/12

(54) **ZAHNSTANGENLENKGETRIEBE**
TOOTHED-RACK STEERING GEAR
MÉCANISME DE DIRECTION À CRÉMAILLÈRE

(30) Priorität: 10.08.2011 DE 102011109878
(43) Veröffentlichungstag der Anmeldung: 18.06.2014
(73) Patentinhaber: ThyssenKrupp Presta AG, 9492 Eschen (LI)
(72) Erfinder: MEYER, Daniel, CH-9443 Widnau (CH); RIEPOLD, Thomas, CH-9470 Buchs SG (CH); STECK, Philippe, CH-3123 Belp (CH)
(74) Vertreter: Lenzing Gerber Stute
(86) Internationale Anmeldenummer: PCT/EP2012/003049
(87) Internationale Veröffentlichungsnummer: WO 2013/020640

(56) Entgegenhaltungen:
- DE-A1- 2 049 386
- DE-A1- 2 634 054
- DE-A1- 10 247 331
- DE-A1-102006 023 795
- FR-A1- 2 760 219

## Beschreibung

Die vorliegende Erfindung betrifft ein Zahnstangenlenkgetriebe nach dem Oberbegriff des Anspruchs 1, sowie ein Druckstück für ein Zahnstangenlenkgetriebe nach Anspruch 7.

Bei gattungsgemäßen Zahnstangenlenkgetrieben überträgt eine Lenkwelle das von einem Fahrer auf ein Lenkrad ausgeübte Lenkdrehmoment auf eine Eingangswelle eines Lenkgetriebes. Die Eingangswelle des Lenkgetriebes ist als Ritzel ausgebildet und kämmt mit einer Zahnstange, die in dem Gehäuse des Lenkgetriebes in Längsrichtung verschieblich gelagert ist. Eine Drehung der Eingangswelle und des Ritzels wird dadurch in eine Schiebebewegung der Zahnstange umgesetzt. Die Zahnstange selbst ist über Spurstangen mit den gelenkten Rädern des Kraftfahrzeugs verbunden. Die Drehung des Lenkrades wird so in eine Lenkbewegung der gelenkten Räder umgesetzt.

Der Eingriff der Verzahnung zwischen dem Ritzel und der Zahnstange soll möglichst spielfrei sein. Um dies zu erreichen, wird die Zahnstange üblicherweise von einem federbelasteten Druckstück gegen das Ritzel gedrängt. Das Druckstück selbst liegt an der der Verzahnung abgewandten Oberfläche der Zahnstange an und sitzt in einer im Allgemeinen zylindrischen Bohrung des Lenkungsgehäuses. Die einfachste Form des Druckstücks ist ein metallisches Druckstück, das in der zylindrischen Bohrung gleitgelagert und von einer Schraubenfeder gegen die Zahnstange vorgespannt ist. Durch die Reibung zwischen der Zahnstange und dem Druckstück wird ein solches Druckstück bei einer Hin- und Herbewegung der Zahnstange abwechselnd gegen die in Bewegungsrichtung der Zahnstange liegenden Wandungen der Bohrung gedrängt. Dabei entstehen Geräusche, das sogenannte Druckstückklappern.

Es sind verschiedene Ansätze bekannt, das Druckstückklappern zu reduzieren oder ganz zu vermeiden. Bei einigen Lösungen wird zwischen dem Druckstück und der Druckstückbohrung ein Kunststoff- oder Gummielement eingesetzt, das die Bewegung des Druckstücks dämpft und einen direkten metallischen Kontakt vermeiden soll. So ist aus der Patentschrift EP 1 084 933 B1 ein Zahnstangenlenkgetriebe bekannt, bei dem eine klapperfreie Führung eines Druckstücks in einer Bohrung eines Lenkgetriebegehäuses über einen in einer exzentrischen Nut angeordneten O-Ring sichergestellt ist. Die Druckschrift DE 2 634 054 A1 beschreibt ein Druckstück, das selbst in einer metallischen Hülse gelagert und von einer zwischen der Hülse und dem Druckstück wirkenden Schraubenfeder gegen die Zahnstange gedrängt wird. Die metallische Hülse wiederum ist an ihrer äußeren Umfangsfläche mit einer Gummibuchse versehen, die die Hülse in Radialrichtung der Bohrung gegen das Gehäuse der Lenkung abstützt. Ein direkter metallischer Kontakt der Hülse mit dem Gehäuse soll dadurch vermieden werden. Die Gummihülse wird in Axialrichtung der Bohrung nicht oder nur gering belastet, da die metallische Hülse den Axialbewegungen des Druckstücks nicht folgt. Dieser Aufbau ist komplex und in der Montage aufwendig. Aus der Druckschrift DE 10 2009 028 031 A1 ist ein Druckstück gekannt, an dessen Rand Dämpfungselemente aus einem Elastomer angeordnet sind. Diese Dämpfungselemente vermeiden den direkten metallischen Kontakt des Druckstücks mit dem Lenkungsgehäuse. Die Montage dieses Druckstücks, bei der die Elastomere unter Vorspannung montiert werden, ist aufwendig. Es besteht zudem die Gefahr, dass durch Bewegungen des Druckstücks ein Verschleiß der Elastomere eintritt.

Einen anderen Weg zeigt die Druckschrift DE 10 2004 004 390 A1. Hier wird ein Druckstück vorgeschlagen, das in einer umlaufenden Nut ein metallisches Toleranzband trägt, mit dem das Druckstück passgenau spielfrei in die Bohrung eingesetzt wird. Durch die spielfreie Montage und die rein metallischen Bauelemente soll die zu Klappergeräuschen führende Relativbewegung des Druckstücks gegenüber dem Gehäuse nicht gedämpft, sondern vollständig unterbunden werden. Diese technische Lösung ist in der Fertigung sehr aufwendig, da nach der Fertigung des Druckstücks und des Lenkungsgehäuses die Toleranzen vermessen werden müssen und dann ein entsprechend passendes Toleranzband ausgewählt werden muss, mit dem die Fassung spielfrei, aber nicht klemmend eingestellt wird. Neben der präzisen Vermessung der Bauteile bei der Fertigung ist auch das Vorhalten und Auswählen einer Vielzahl von Toleranzbändern unterschiedlicher Abmessungen erforderlich.

DE 10 2006 023 795 A1 zeigt eine Druckstückanordnung mit einer äußeren Hülse, die in einer Aufnahmebohrung der Lenkung über eine Presspassung eingepresst werden kann. In der Hülse ist ein Druckstück angeordnet, das über eine ringförmige Elastomerfeder und eine Schraubenfeder gegen die Zahnstange gedrängt wird. Die Elastomerfeder wirkt nur in Axialrichtung der Anordnung. Sie umgibt oder umschließt das Druckstück nicht. Das Druckstück ist vielmehr unmittelbar in der Hülse geführt

DE 102 47 331 A1 zeigt eine Druckstückeinheit aus einer Hülse, die in eine Aufnahmebohrung einer Lenkung eingepresst ist. Das Druckstück ist seitlich über einen lose in eine Nut eingelegten O-Ring gegenüber der Hülse abgestützt. Zwischen dem O-Ring und der Hülse entstehen im Betrieb Relativbewegungen, die Reibung und Verschleiß verursachen. Der O-Ring bewirkt keine axiale Anpresskraft. Die Anpresskraft des Druckstücks an die Zahnstange wird über eine Schraubenfeder bewirkt. Das Druckstück ist besonders geräuscharm durch Herstellung aus einem Kunststoff.

DE 2 049 386 beschreibt ein Druckstück, das über eine Elastomerfeder gegen die Zahnstange gedrängt wird. Die Elastomerfeder ersetzt hierbei lediglich die üblicherweise vorgesehene Schraubenfeder. Die Elastomerfeder weist eine äußere Hülse, ein rohrförmiges Elastomer und eine innere Hülse auf. Die Federwirkung entsteht durch Schubspannung beziehungsweise genauer durch Scherkräfte, wenn die beiden metallischen Hülsen in Axialrichtung gegeneinander verlagert werden. Das Druckstück selbst ist in diesem Dokument unmittelbar in einer Aufnahmebohrung des Lenkungsgehäuses geführt und steht mit diesem in direktem metallischem Kontakt. Es erfolgt im Betrieb eine Relativbewegung zwischen dem Drückstück und der Aufnahmebohrung im Gehäuse. Diese verursacht Reibung und Verschleiß.

Die bekannten Lösungen sind entweder bei der Herstellung und Montage aufwändig oder sie neigen zum Druckstückklappern.

Es ist deshalb Aufgabe der vorliegenden Erfindung, ein Zahnstangenlenkgetriebe zu schaffen, bei dem das Druckstückklappern nicht auftritt und das dennoch einfach zu montieren und im Betrieb verschleißarm ist. Diese Aufgabe wird von einem Zahnstangenlenkgetriebe für ein Kraftfahrzeug gelöst, gemäß dem Anspruch 1.

Weil das Druckstück eine äußere metallische Hülse aufweist, die mit Presspassung in die Druckstückbohrung eingesetzt wird, in der Hülse im wesentlichen koaxial mindestens ein Elastomerdämpfungselement und vom mindestens einem Elastomerdämpfungselement umschlossen wiederum etwa koaxial ein metallischer Druckstückkern angeordnet ist, kann die äußere metallische Hülse aufgrund der Presspassung sich nicht gegenüber der Druckstückbohrung des Getriebegehäuses bewegen. Geräusche an dieser Stelle sind dadurch ausgeschlossen. Die in der metallischen Hülse angeordnete Elastomerschicht erlaubt geringe Bewegungen des wiederum darin angeordneten Druckstückkerns. Diese Bewegungen führen aber nicht zu den als Druckstückklappern bekannten Geräuschen, da kein direkter metallischer Kontakt entsteht. Dabei kann das mindestens eine Elastomerdämpfungselement mit Vorzug durch eine einteilige Hülse gebildet sein. Denkbar und möglich ist jedoch auch der Einsatz von mehreren stäbchenartigen Elastomerdämpfungselementen, die zwischen dem Druckstückkern und der äußeren metallischen Hülse angeordnet sind.

Weil weiter das mindestens eine Elastomerdämpfungselement, beziehungsweise die Elastomerhülse an seiner / ihrer Außenseite mit der metallischen Hülse und an seiner / ihrer Innenseite mit dem Druckstückkern fest verbunden ist beziehungsweise sind, wird das mindestens eine Elastomerdämpfungselement, beziehungsweise die Elastomerhülse, zwar auf Druck und Scherung beansprucht. Es entstehen aber keine Relativbewegungen an der Oberfläche des Elastomers, so dass ein Verschleiß des Elastomers durch Reibung ausgeschlossen ist. Die feste Verbindung kann durch geeignete Materialwahl und Dimensionierung erzielt werden, so dass eine Verbindung durch Einpressen erfolgen kann. Die feste Verbindung kann aber auch durch Kleben oder Vulkanisieren erfolgen. Es kann auch vorgesehen sein, zwischen der Hülse und dem Elastomer einerseits und dem Elastomer und dem Druckstückkern andererseits unterschiedliche Verbindungstechniken zu wählen, die jedoch beide im Betrieb eine Relativbewegung der Oberflächen gegeneinander verhindern.

Insbesondere können die Bauteile, die metallische Hülse, das mindestens eine Elastomerdämpfungselement beziehungsweise die Elastomerhülse und der Druckstückkern, miteinander durch Vulkanisieren verbunden werden, so dass ein einteiliges Bauteil entsteht. Dieses Bauteil ist besonders einfach zu montieren, da es insgesamt in die Druckstückbohrung eingepresst werden kann. Wenn das mindestens eine Elastomerdämpfungselement beziehungsweise die Elastomerhülse in Axialrichtung der Druckstückbohrung bei der Montage des Druckstücks unter Schubspannung gesetzt wird, bewirkt das mindestens eine Elastomerdämpfungselement beziehungsweise die Elastomerhülse eine Vorspannung des Druckstückkerns gegen die Zahnstange. Auf eine separate Druckstückfeder kann dann verzichtet werden. Bei geeigneter Dimensionierung kann sogar auf die übliche Verschraubung zum Verschluss der Druckstückbohrung und zur Abstützung des Druckstücks verzichtet werden. Es ergibt sich insgesamt ein Zahnstangenlenkgetriebe, das in der Fertigung besonders einfach und im Betrieb geräuscharm und dauerhaft zuverlässig ist. Die Kosten werden dadurch gesenkt und die Dauerhaftigkeit erhöht.

Es ist weiter die Aufgabe der vorliegenden Erfindung ein Druckstück bereitzustellen, das einfach in ein Zahnstangenlenkgetriebe eingebaut werden kann und im Betrieb verschleißarm ist und ein geringes Druckstückklappern aufweist.

Gelöst wird die Aufgabe durch ein Druckstück für ein Zahnstangenlenkgetriebe für ein Kraftfahrzeug, gemäß dem Anspruch 7.

Mit Vorzug ist das mindestens eine Elastomerdämpfungselement durch eine Elastomerhülse gebildet ist, die den Druckstückkern umschließt.

Zur Vereinfachung der Montage wird es vorgesehen, dass das Elastomerdämpfungselement an seiner Außenseite mit der metallischen Hülse und an seiner Innenseite mit dem Druckstückkern unlösbar verbunden ist, insbesondere durch Vulkanisieren, so dass diese ein einteiliges Bauteil bilden.

Die Hülse kann auch an ihrer der Zahnstange abgewandten Seite ganz oder teilweise durch eine Stirnwand verschlossen sein. Sie ist dann topfförmig weitergebildet. Zwischen dem Drückstück und/oder dem Elastomerdämpfungselement einerseits und der Stirnwand andererseits kann dann eine Elastomerfeder vorgesehen sein, die sich gegen die Stirnwand abstützt und die die Anpresskraft in Axialrichtung zwischen dem Druckstück und der Hülse verstärkt und unterstützt. Dieser Elastomerfeder kann vorteilhaft die Funktion eines progressiv wirkenden federnden und dämpfenden Anschlagelements zukommen.

In einer Weiterbildung kann die Hülse selbst mit einem Außengewinde versehen sein, das in ein kompatibles Innengewinde des Druckstückdoms des Zahnstangenlenkgetriebes einschraubbar ist. Dadurch wird eine verbesserte Einstellbarkeit der Druckstückvorspannung bei der Montage des Lenkgetriebes erzielt.

Der Druckstückkern selbst ist aus einem metallischen Werkstoff gefertigt, damit sich eine feste Verbindung mit dem Elastomerdämpfungselement in besonders einfacher und dauerhafter Weise herstellen lässt, insbesondere wie oben beschrieben durch Vulkanisieren. Hinzu kommt als Vorteil, dass die Masse des Druckstückkerns gegenüber Druckstücken und Druckstückkernen aus Kunststoff größer ist, was üblicherweise als Nachteil angesehen wird. Die größere Masse bewirkt hier aber eine verbesserte Beherrschbarkeit des dynamischen Schwingungsverhaltens im Betrieb, da die Kombination aus Druckstückkern und Elastomerdämpfungselement ein schwingfähiges System darstellt.

Nachfolgend wird ein Ausführungsbeispiel der vorliegenden Erfindung anhand der Zeichnung näher beschrieben. Es zeigt:

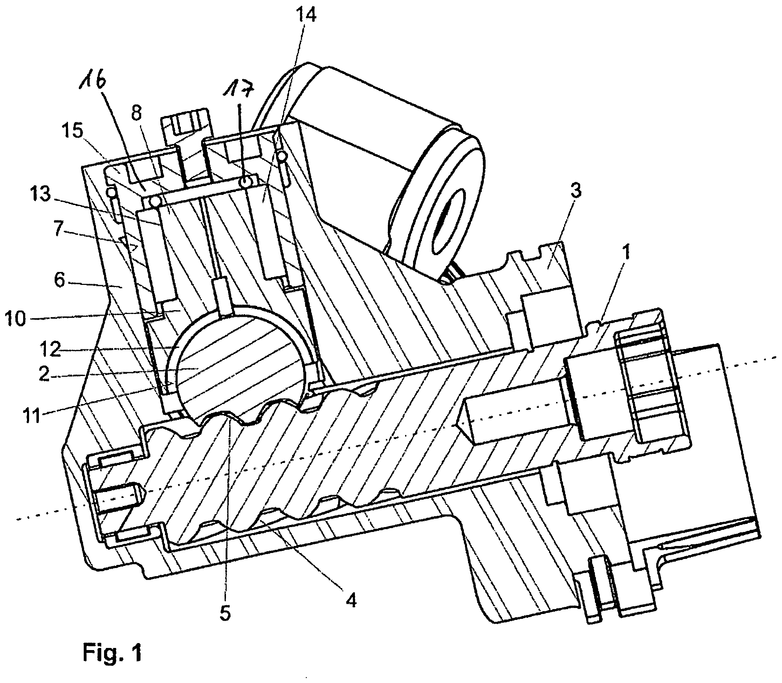

- Figur 1:: ein erfindungsgemäßes Zahnstangenlenkgetriebe in einem Schnitt entlang der Druckstücksachse.

Aus der Beschreibung des Zahnstangenlenkgetriebes erschließt sich auch die Beschreibung der Merkmale des erfindungsgemäßen Druckstücks.

Die Figur 1 zeigt einen Schnitt durch ein Lenkgetriebe entlang der Drehachse eines Lenkritzels 1 und quer zu der Längsachse einer Zahnstange 2. Das Lenkritzel 1 ist drehbar in einem Lenkungsgehäuse 3 gelagert und mit einer Verzahnung 4 versehen. Die Verzahnung 4 kämmt mit einer entsprechenden Verzahnung 5 der Zahnstange 2, so dass sich die Zahnstange 2 bei Drehung des Lenkritzels 1 senkrecht zu der Zeichenebene bewegt. Das Lenkungsgehäuse 3 trägt einen etwa rohrförmigen Dom 6, der eine Druckstückbohrung 7 umgibt. In der Druckstückbohrung 7 ist ein Druckstück 8 angeordnet, das nachfolgend näher beschrieben wird.

Das Druckstück 8 umfasst einen Druckstückkern 10, der aus einem metallischen Werkstoff, vorzugsweise aus Stahl, gefertigt ist. Der Druckstückkern 10 ist an seiner der Zahnstange 2 zugewandten Seite mit einem konkaven, etwa halbzylindrischen Profil 11 versehen, das die Zahnstange 2 zu rund 50 % ihres Umfangs umgibt. In dem Profil 11 liegt eine Gleiteinlage 12, die die Reibung zwischen dem Druckstück 8 und der Zahnstange 2 bei Bewegung der Zahnstange 2 senkrecht zur Zeichenebene verringert. Der Druckstückkern 10 steht nicht in unmittelbaren Kontakt mit der Wandung des Doms 6. Oberhalb des Profils 11 mit zunehmenden Abstand von der Zahnstange 2 ist der Druckstückkern 10 gestuft und in einem Bereich geringeren Durchmessers 13 ist der Druckstückkern 10 kreiszylindrisch gestaltet. Der Bereich 13 ist außen von einem Elastomerdämpfungselement umgeben, nachfolgend einfach als Elastomerhülse 14 bezeichnet, die aus einem elastomeren Werkstoff gefertigt ist. Die Elastomerhülse 14 ist auf den Bereich 13 aufvulkanisiert. An ihrer äußeren Mantelfläche ist die Elastomerhülse 14 von einer Metallhülse 15 umgeben, mit der die Elastomerhülse 14 ebenfalls fest verbunden ist, beispielsweise durch Vulkanisieren. Im Ergebnis kann sich der Druckstückkern 10 gegenüber der Stahlhülse 15 nur in dem Maße bewegen, wie es die Druck- und Scherelastizität der Elastomerhülse 14 erlaubt.

Die Stahlhülse 15 ist mit einer Presspassung in die Druckstückbohrung 7 des Doms 6 fest eingesetzt. Die Stahlhülse 15 ist aufgrund des Presssitzes in dem Dom 6 im Rahmen der im Betrieb der Zahnstangenlenkung auftretenden Kräfte unbeweglich und kann folglich in Kontakt mit dem Lenkungsgehäuse 3 keine Geräusche hervorrufen. Der Druckstückkern 10 steht mit der Zahnstange 2 nur über die Gleitanlage 12 und mit der Stahlhülse 15 nur über die Elastomerhülse 14 in Verbindung. Ein direkter metallischer Kontakt mit anderen Bauteilen besteht nicht. Auch bei Bewegungen der Zahnstange 2, die im Betrieb der Lenkung 3 beispielsweise durch Rückwirkungen der gelenkten Räder auf die Lenkung entstehen können, kommt der Druckstückkern 10 des Druckstücks 8 nicht mit anderen metallischen Bauteilen in Kontakt und kann folglich die als Druckstückklappern bekannten Geräusche nicht erzeugen.

Besonders vorteilhaft ist das Druckstück 8 dadurch, dass der Druckstückkern 10, die Elastomerhülse 14 und die Stahlhülse 15 miteinander durch Vulkanisieren fest verbunden sein können. Das Druckstück 8 ist dann als einteiliges Bauelement ausgebildet. Es kann durch Pressen in den Dom 6 eingeführt werden und sitzt dann fest darin. Weitere Montageschritte sind nicht erforderlich. Die Bemaßung der Bauelemente kann so erfolgen, dass die Elastomerhülse 14 unter einer Schubspannung steht, die den Druckstückkern 10 und die Gleitanlage 12 gegen die Zahnstange 2 drängt. Dadurch wird auch die erforderliche Vorspannung der Zahnstange 2 in den Eingriff der Verzahnungen 4,5 bewirkt, so dass eine weitere Feder zur Vorspannung des Druckstücks 8 erforderlich ist. Die Teilezahl und der Fertigungsaufwand werden dadurch verringert, obwohl die Funktion hinsichtlich der möglichen Geräuschentwicklung verbessert wird.

In einer bevorzugten Ausführung, wie sie in Fig. 1 dargestellt ist, kann die Stahlhülse 15 an ihrer der Zahnstange 2 abgewandten Stirnseite mit einer einstückig angeformten Stirnwand 16 versehen sein, die die Elastomerhülse 14 nach außen abdeckt und so gegen Umwelteinflüsse schützt. Zwischen der Stirnwand 16 einerseits und dem Druckstückkern 10 und/oder der Elastomerhülse 14 andererseits kann ergänzend ein Elastomerfederelement 17 beispielsweise in Form eines O-Rings angeordnet sein, das die axiale Vorspannung des Druckstückkerns unterstützt und zudem als ein progressiv dämpfendes Anschlagelement wirkt, um den Weg des Druckstückkerns 10 in Richtung von der Zahnstange 2 weg zu begrenzen, ohne dass der Druckstückkern 10 an der (metallischen) Stirnwand 16 anschlagen kann. Die Entstehung von Störgeräuschen im Betrieb wird dadurch weiter verringert.

Auch wenn im Beispiel eine im Querschnitt gesehen halbkreisförmige Gleitanlage 12 dargestellt ist, sind auch andere Profile denkbar und möglich. Es können beispielsweise auch Gleitanlagen mit einem V-förmigen Profil oder einem Y-förmigen Profil eingesetzt sein. Die Ausbildung der Gleitanlage ist korrespondierend zur Ausbildung des Rückens der Zahnstange auszulegen.

## Patentansprüche

1. Zahnstangenlenkgetriebe für ein Kraftfahrzeug, mit einem mit einer Lenkwelle verbundenen Lenkritzel (1), welches mit einer in einem Gehäuse (3) verschieblich gelagerten Zahnstange (2) in Eingriff steht, und mit einem in dem Gehäuse (3) in einer Druckstückbohrung (7) angeordneten Druckstück (8), welches die Zahnstange (2) in spielfreiem Eingriff mit dem Lenkritzel (1) hält, wobei das Druckstück (8) eine äußere metallische Hülse (15) aufweist, die mit Presspassung in die Druckstückbohrung (7) eingesetzt ist, wobei in der metallischen Hülse (15) mindestens ein Elastomerdämpfungselement angeordnet ist, und wobei ein metallischer Druckstückkern (10) angeordnet ist, der von dem mindestens einem Elastomerdämpfungselement umschlossen ist, **da**- **durch gekennzeichnet**, dass das Elastomerdämpfungselement an seiner Außenseite mit der metallischen Hülse (15) und an seiner Innenseite mit dem Druckstückkern (10) fest verbunden ist.

2. Zahnstangenlenkgetriebe nach Anspruch 1, **dadurch gekennzeichnet, dass** das mindestens eine Elastomerdämpfungselement durch eine Elastomerhülse (14) gebildet ist, die den Druckstückkern (10) umschließt.

3. Zahnstangenlenkgetriebe nach einem der vorhergehenden Ansprüche, **dadurch gekennzeichnet, dass** die metallische Hülse (15), das Elastomerdämpfungselement (14) und der Druckstückkern (10) miteinander durch Vulkanisieren verbunden sind, so dass diese ein einteiliges Bauteil bilden.

4. Zahnstangenlenkgetriebe nach einem der vorhergehenden Ansprüche, **dadurch gekennzeichnet, dass** der Druckstückkern (10) gegenüber der Hülse (15) gegen die Rückstellkraft der Elastomerdämpfungselement bewegbar ist, ohne mit der Hülse (15) in Kontakt zu kommen.

5. Zahnstangenlenkgetriebe nach einem der vorhergehenden Ansprüche, **dadurch gekennzeichnet, dass** die Elastomerdämpfungselement in Axialrichtung der Druckstückbohrung (7) unter Schubspannung gesetzt ist, so dass die Elastomerdämpfungselement eine Vorspannung des Druckstückkerns (10) gegen die Zahnstange (2) erzeugt.

6. Zahnstangenlenkgetriebe nach einem der vorhergehenden Ansprüche, **dadurch gekennzeichnet, dass** das Druckstück (8) die Druckstückbohrung (7) auf der der Zahnstange (2) abgewandten Seite vollständig verschließt.

7. Druckstück für ein Zahnstangenlenkgetriebe für ein Kraftfahrzeug, das in eine Druckstückbohrung (7) eines Gehäuses (3) zur Lagerung einer Zahnstange des Zahnstangenlenkgetriebes einbringbar ist, wobei das Druckstück (8) eine äußere metallische Hülse (15) aufweist, die mit Presspassung in die Druckstückbohrung (7) einsetzbar ist, und in der metallischen Hülse (15) mindestens ein Elastomerdämpfungselement angeordnet ist, und wobei ein metallischer Druckstückkern (10) angeordnet ist, der von dem mindestens einem Elastomerdämpfungselement umschlossen ist, **dadurch gekennzeichnet, dass** das Elastomerdämpfungselement an seiner Außenseite mit der metallischen Hülse (15) und an seiner Innenseite mit dem Druckstückkern (10) fest verbunden ist, so dass diese ein einteiliges Bauteil bilden.

8. Druckstück nach Anspruch 8, **dadurch gekennzeichnet, dass** das mindestens eine Elastomerdämpfungselement durch eine Elastomerhülse (14) gebildet ist, die den Druckstückkern (10) umschließt.

9. Druckstück nach einem der Ansprüche 7 oder 8, **dadurch gekennzeichnet, dass** das Elastomerdämpfungselement an seiner Außenseite mit der metallischen Hülse (15) und an seiner Innenseite mit dem Druckstückkern (10) durch Vulkanisieren fest verbunden ist.

## Claims

1. Toothed-rack steering gear for a motor vehicle, having a steering pinion (1) which is connected to a steering column and which is in engagement with a toothed rack (2) which is mounted in a movable fashion in a housing (3), and having a thrust piece (8) which is arranged in the housing (3) in a thrust piece bore (7) and which holds the toothed rack (2) in play-free engagement with the steering pinion (1), wherein the thrust piece (8) has an outer metallic sleeve (15) which is inserted with an interference fit into the thrust piece bore (7), wherein at least one elastomer damping element is arranged in the metallic sleeve (15), and wherein a metallic thrust piece core (10) is arranged, which is surrounded by the at least one elastomer damping element, **characterised in that** the elastomer damping element is connected firmly on its outer side with the metallic sleeve (15) and on its inner side with the thrust piece core (10).

2. Toothed-rack steering gear according to Claim 1, **characterised in that** the at least one elastomer damping element is formed by an elastomer sleeve (14), which surrounds the thrust piece core (10).

3. Toothed-rack steering gear according to any one of the preceding claims **characterised in that** the metallic sleeve (15), the elastomer damping element (14) and the thrust piece core (10) are connected with each other by vulcanisation, so that these form a one-piece component.

4. Toothed-rack steering gear according to any one of the preceding claims **characterised in that** the thrust piece core (10) is movable relative to the sleeve (15) against the reset force of the elastomer damping element, without coming into contact with the sleeve (15).

5. Toothed-rack steering gear according to any one of the preceding claims **characterised in that** the elastomer damping element is placed under shear stress in the axial direction of the thrust piece bore (7), so that the elastomer damping element generates a pre-tensioning of the thrust piece core (10) against the toothed rack (2).

6. Toothed-rack steering gear according to any one of the preceding claims **characterised in that** the thrust piece (8) completely closes the thrust piece bore (7) on the side facing away from the toothed rack (2).

7. Thrust piece for a toothed-rack steering gear for a motor vehicle, which can be inserted into the thrust piece bore (7) of a housing (3) for mounting a toothed rack of the toothed-rack steering gear, wherein
the thrust piece (8) has an outer metallic sleeve (15), which can be inserted with an interference fit into the thrust piece bore (7), and
at least one elastomer damping element is arranged in the metallic sleeve (15), and wherein
a metallic thrust piece core (10) is arranged, which is surrounded by the at least one elastomer damping element, **characterised in that** the elastomer damping element is firmly connected on its outer side with the metallic sleeve (15) and on its inner side with the thrust piece core (10), so that these form a one-piece component.

8. Thrust piece according to Claim 8, **characterised in that** the at least one elastomer damping element is formed by an elastomer sleeve (14), which surrounds the thrust piece core (10).

9. Thrust piece according to any one of Claims 7 or 8, **characterised in that** the elastomer damping element is firmly connected on its outer side with the metallic sleeve (15) and on its inner side with the thrust piece core (10) by vulcanisation.

## Revendications

1. Mécanisme de direction à crémaillère pour un véhicule automobile, comprenant un pignon de direction (1) solidaire d'un arbre de direction, qui est en prise avec une crémaillère (2) montée mobile en translation dans un boîtier (3), et une pièce de pression (8) qui est disposée dans le boîtier (3), dans un perçage de pièce de pression (7) et qui maintient la crémaillère (2) en prise sans jeu avec le pignon de direction (1), auquel cas la pièce de pression (8) présente une douille métallique extérieure (15) qui est emmanchée avec ajustement à pression dans le perçage de la pièce de pression (7), auquel cas dans la douille métallique (15) est disposé au moins un élément d'amortissement en élastomère, et auquel cas un noyau métallique de pièce de pression (10) est disposé qui est entouré par l'au moins un élément amortisseur en élastomère, **caractérisé en ce que** l'élément d'amortissement en élastomère est solidement relié sur son côté extérieur avec la douille métallique (15) et sur son côté intérieur avec le noyau de pièce de pression (10).

2. Mécanisme de direction à crémaillère selon la revendication 1, **caractérisé en ce que** l'au moins un élément d'amortissement en élastomère est formé par une douille en élastomère (14) qui entoure le noyau de pièce de pression (10).

3. Mécanisme de direction à crémaillère selon une des revendications précédentes, **caractérisé en ce que** la douille métallique (15), l'élément d'amortissement en élastomère (14) et le noyau de pièce de pression (10) sont mutuellement reliés par un procédé de vulcanisation de sorte à former un composant d'une seule pièce.

4. Mécanisme de direction à crémaillère selon une des revendications précédentes, **caractérisé en ce que** le noyau de pièce de pression (10) est mobile par rapport à la douille (15) contre la force de rappel de l'élément d'amortissement en élastomère, sans entrer en contact avec la douille (15).

5. Mécanisme de direction à crémaillère selon une des revendications précédentes, **caractérisé en ce que** l'élément d'amortissement en élastomère est soumis à une contrainte de cisaillement en direction axiale du perçage de pièce de pression (7) de sorte que l'élément d'amortissement en élastomère génère une précontrainte du noyau de pièce de pression (10) contre la crémaillère (2).

6. Mécanisme de direction à crémaillère selon une des revendications précédentes, **caractérisé en ce que** la pièce de pression (8) ferme entièrement le perçage de pièce de pression (7) sur le côté opposé de la crémaillère (2).

7. Pièce de pression pour un mécanisme de direction à crémaillère pour un véhicule automobile qui est susceptible de pouvoir être introduite dans un perçage de pièce de pression (7) d'un boîtier (3) pour le logement d'une crémaillère du mécanisme de direction à crémaillère, auquel cas
la pièce de pression (8) présente un douille métallique extérieure (15) qui est emmanchée avec ajustement à pression dans le perçage de la pièce de pression (7), et
dans la douille métallique (15) au moins un élément d'amortissement en élastomère est agencé, et auquel cas
un noyau métallique de pièce de pression (10) est agencé qui est entouré par au moins un élément d'amortissement en élastomère, **caractérisée en ce que** l'élément d'amortissement en élastomère est fermement relié sur son côté extérieur avec la douille métallique (15) et sur son côté intérieur avec le noyau de pièce de pression (10) de sorte à former un composant d'une seule pièce.

8. Pièce de pression selon la revendication 7, **caractérisée en ce qu'**au moins un élément d'amortissement en élastomère est formé par une douille en élastomère (14) qui entoure le noyau de pièce de pression (10).

9. Pièce de pression selon une des revendications 7 ou 8, **caractérisée en ce que** l'élément d'amortissement en élastomère est solidement relié sur son côté extérieur avec la douille métallique (15) et sur son côté intérieur avec le noyau de pièce de pression (10) par un procédé de vulcanisation.
